# EUROPEAN PATENT APPLICATION

(11) **EP 1 327 586 A1**
(43) Date of publication of application: **16.07.2003**
(21) Application number: 03000791.8
(22) Date of filing: 14.01.2003
(51) Int. Cl.: B65D 5/42

(54) **Package device formed from a carton blank having at least one revolving wheel**

(30) Priority: 15.01.2002 IT BO20020016
(71) Applicant: New Relax S.R.L., 61100 Pesaro (IT)
(72) Inventor: Carbonari, Maurizio, 61100 Pesaro (IT)
(74) Representative: Negrini, Elena

(57) **Abstract**

A package device for at least a product (20) includes a carton blank (2) having a plurality of transversal and longitudinal creasing lines, defining at least a first wall (3), connected to at least a second wall (4). The carton blank (2) is erected to form a container for product (20). The device (1) includes moving means (10) having at least a revolving wheel (11) and supported by the carton blank (2) in proximity of an edge portion (25) defined by first (3) and second (4) walls, in an assembled condition (A) of the device (1).

## Description

The present invention relates to the technical field concerning packaging of goods and of products, having high weight or volume, for the shipment, the storage and the sale, and particularly it refers to a package device.

There are several known packages, fit to receive and to accommodate products and goods having huge dimensions, for instance furnitures, appliances or computers, in order to allow the ship and the storage thereof, avoiding damages.

Said packages usually consist of a box or container made of cardboard having a regular or shaped polyhedral form, for the product. There are further provided inserts made of shock dampening material, for instance polyurethane or foam polystyrene or cardboard, which are interposed between product and container.

The main drawback of said package devices consists in that they do not allow easy shipment and handling because of huge dimensions and heavy weights. In many cases the movements of said packings require several people or suitable handling means or devices such as lifters, carts, winches which are expensive and not always available or usable where they are needed and therefore they discourage the final customers to purchase products in that shop centers in which the final ship must be performed by the customer.

An object of the present invention is to propose a package device allowing to easily and comfortably move and ship packages also having huge dimensions and heavy weights, without requiring many people or dedicated, expensive and bulky handling means.

Other object of the present invention is to propose a package device, which is strong, reliable and very easy, and fast to be manufactured and assembled and therefore cheap.

The above-mentioned objects are achieved according with the content of the claims.

The characteristics of the invention are underlined in the following, with particular reference to the attached drawings, in which:
- figure 1 shows a front and partial view of the package device object of the present invention in an assembled condition;
- figure 2 shows a partial plan view of a carton blank of figure 1 device in a flat condition;
- figure 3 shows a side view of a pile of the figure 1 devices each provided with recesses for housing the wheels of adjacent devices;

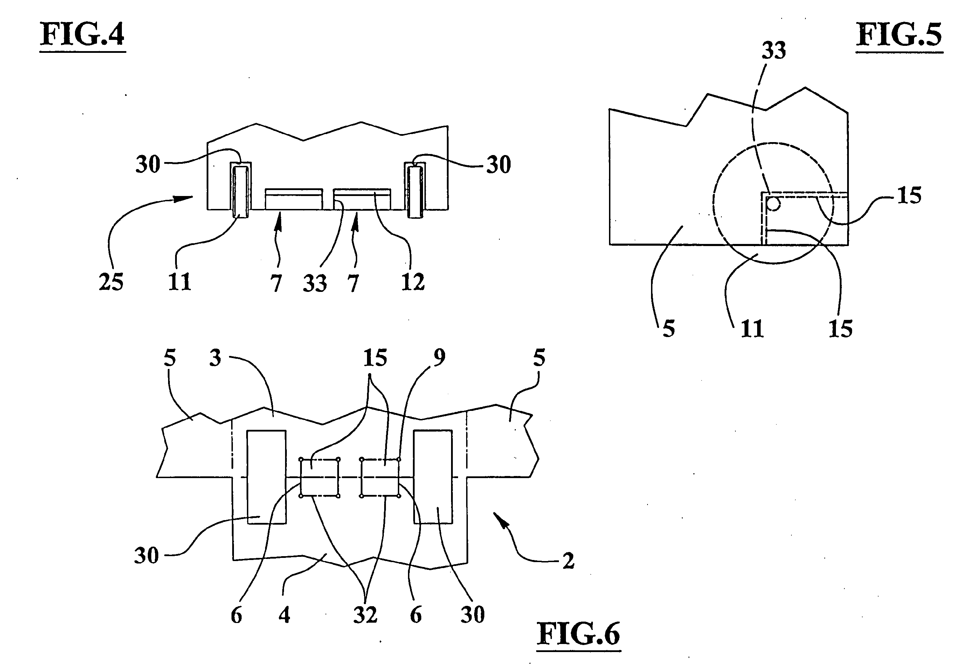

- figure 4 shows a front partial view of a first variant of figure 1 device;
- figure 5 shows a side partial view of figure 4 device;
- figure 6 shows a partial view of the carton blank of figure 4 device in an flat condition;

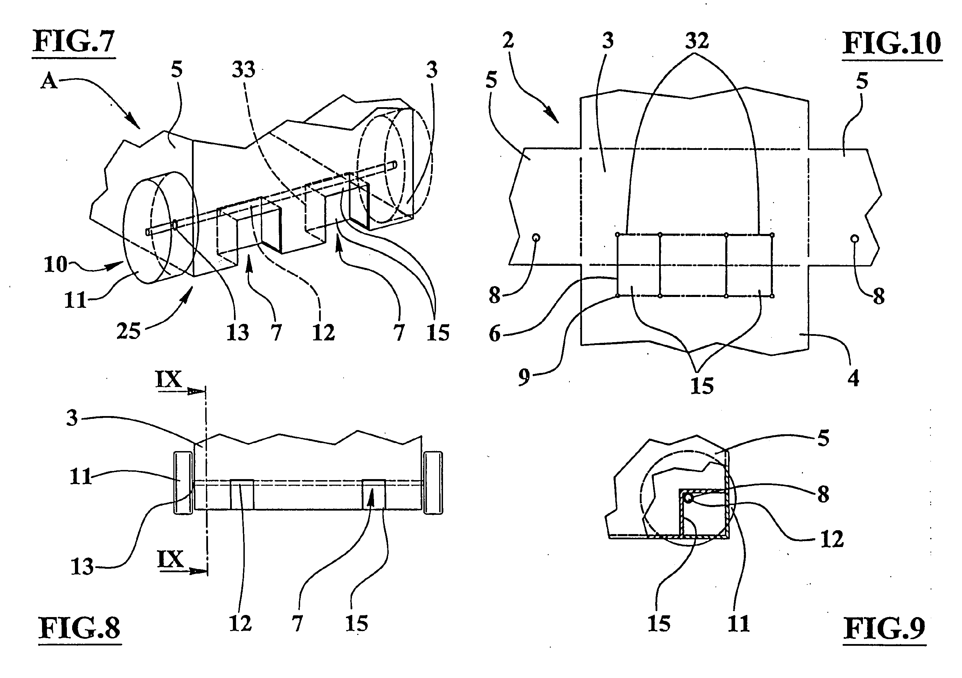

- figure 7 shows a partial axonometric view of a second variant of the figure 1 device in a assembled condition;
- figure 8 shows a front partial view of figure 7 device;
- figure 9 shows a partial enlarged section view of the device according to the line IX-IX of figure 8;
- figure 10 shows a plan partial view of a carton blank of figure 7 device in a flat condition;

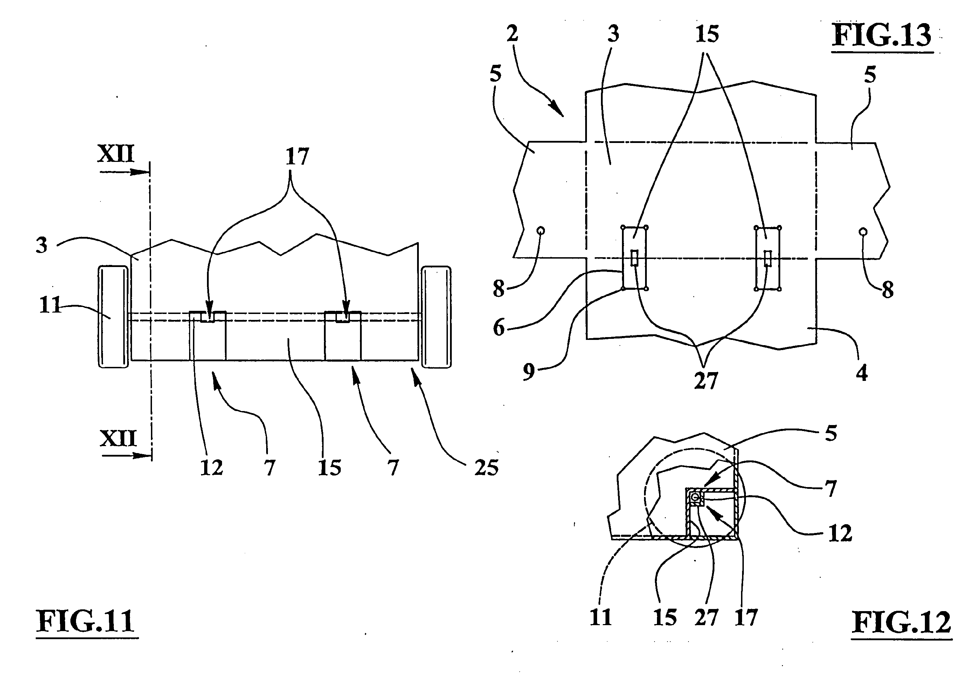

- figure 11 shows a front partial view of a third variant of figure 1 device;
- figure 12 shows a partial enlarged section view according to the line XII-XII of figure 11;

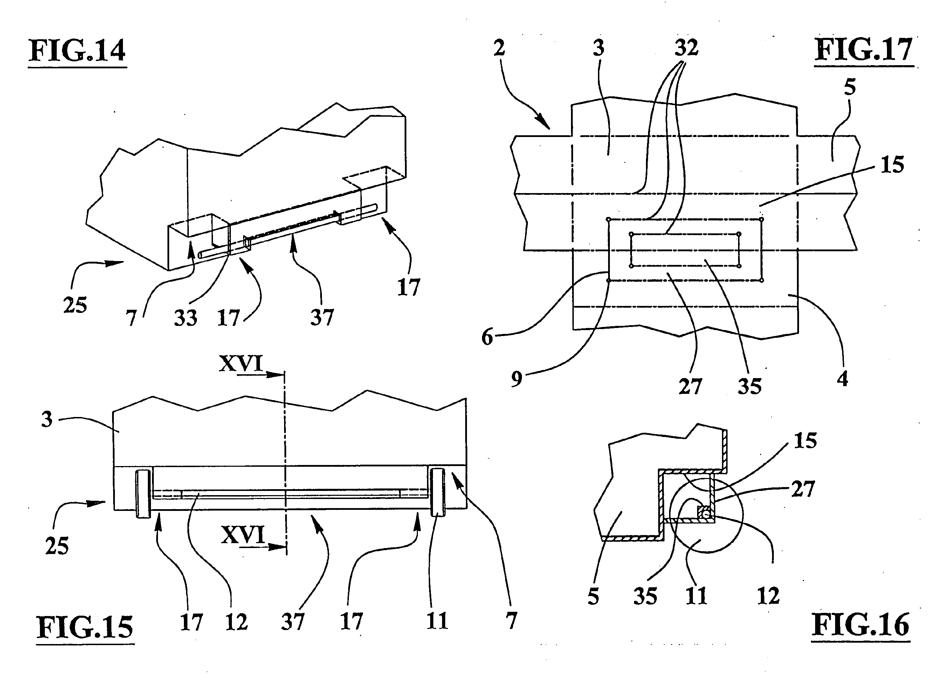

- figure 13 shows a plan view of the carton blank of figure 11 device in a flat condition;
- figure 14 shows a partial axonometric view of a fourth variant of figure 1 device;
- figure 15 shows a partial front view of figure 14 device;
- figure 16 shows a partial enlarged section view according to the line XVI-XVI of figure 15;
- figure 17 shows a plan view of the carton blank of figure 14 device in a flat condition;
- figure 18 shows a partial front view of a fifth variant of figure 1 device;
- figure 19 shows a partial front section view of a sixth variant of figure 1 device;
- figure 20 shows a section partial view according to the line XX-XX of figure 19;
- figure 21 shows a partial section front view of a seventh variant of figure 1 device;
- figure 22 shows a partial axonometric view of an eighth variant of figure 1 device;
- figure 23 shows a front partial view of figure 22 device.

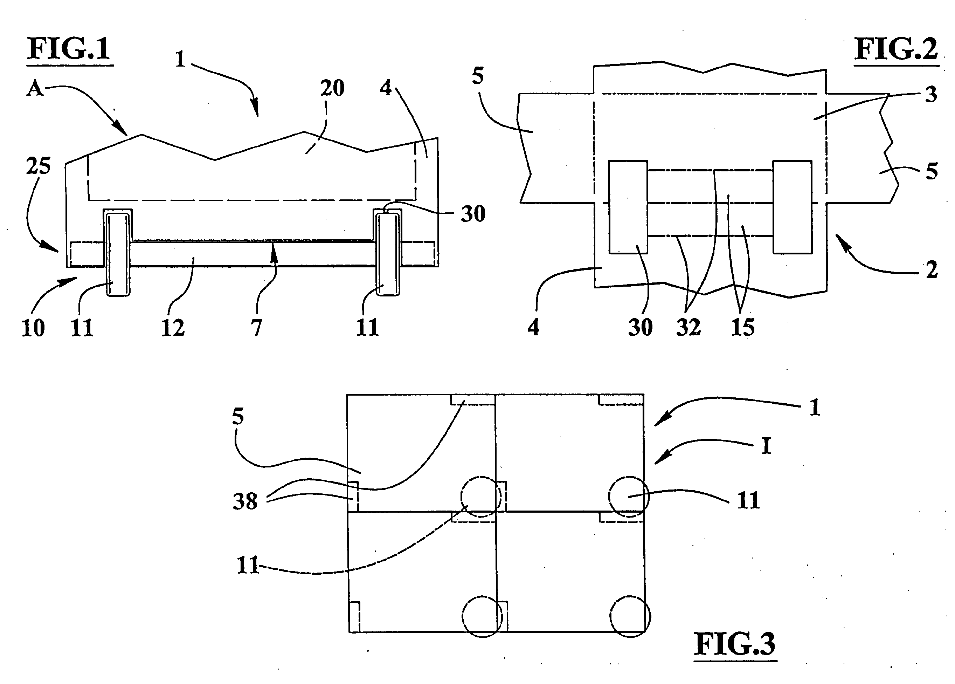

With reference to figures 1 and 2, numeral 1 indicates a package device for a product 20, constituted by a carton blank 2 made of corrugated fiberboard with two or more layers, folded and erected to form a container for said product 20 and having a plurality of transversal and longitudinal creasing lines, defining a first wall 3 connected to a second wall 4 and to third walls 5.

The device 1 includes moving means 10 having two revolving wheels 11 and mutually interconnected by a rotation shaft 12, which is supported by the same carton blank 2 in proximity of an edge portion 25, formed by the first 3 and second 4 walls, in an assembled condition A of the device 1. In the preferred embodiment of the device, the first 3 and second 4 walls of the carton blank 2 form, in the erect condition of carton blank 2, a folded and reentrant portion 7, constituted by two nearly orthogonal borders 15 of said first 3 and second 4 walls. The folded portion 7 is fit to housing the shaft 12, which supports the wheels 11. The shaft 12, whose diameter is approximately equal to the longitudinal dimension, namely the width of the first borders 15, is further supported and mated by end portions of the first 3 and second 4 walls, close to the container vertexes. The walls first 3 and second 4 include folding means 32 or creasing lines in correspondence of the ends of the border 15 and they include two windows 30, carried out by die cutting and fit for accommodating, in the assembled condition A, the related wheels 11 of the moving means 10, which are in this way partially contained inside the outline defined by the first 3, second 4 and third 5 walls.

With reference also to the figure 3, it is provided that the package device 1 in the assembled condition A, has recesses 38 for housing respective protruding portions of the wheels 11 in a piling condition I in which a plurality of devices 1 are superimposed and positioned side by side.

The recesses are carried out by punching only two longitudinal sides of their perimeter or by fully punching said perimeter.

There are furthermore provided one or more handles, fixed or directly carried out in one or more walls of the device 1, to allow easier grip and handling of the latter during transport.

The operation of the package device 1 object of the present invention provides that the carton blank 2, folded and erected to form a container for product 20, supports the rotation shaft 12 and freely rotating wheels 11 by means of folded portion 7, shaped by inward pressing the borders 15 and by means of vertex portions of the edge portion 25. The device weight, mostly if containing a product 20 to be packed, causes the contact of said shaft 12 with borders 15 of folded portions 7, allowing device 1 to be supported by wheels 11 and easily moved thereby. In order to provide a suitable support and to avoid the break of said borders 15, overall width of the folded portions 7 must be equal or greater than half of the first wall 3 width. Position of shaft 12, when the device is lifted and the wheels are not anymore in contact with the ground, is guaranteed by the end portions of the walls first 3 and second 4, in correspondence of vertexes.

Figures from 4 to 6 show a first variant of the device 1, having two folded portions 7, each for accommodating a respective portion of the shaft 12. First 3 and second 4 walls include folding means 32 or creasing lines in correspondence of the end of each first border 15 connected to the walls 3, 4 and a plurality of cuts 6, defining a side portion 33 of each border 15.

The cuts 6 are rectilinear and parallel and they have, in correspondence of respective ends, slots 9 consisting of circular or elliptical holes, suitable to avoid or limiting tear or laceration propagation of the cardboard, subject to mechanical stresses.

The operation of this variant does not differ substantially from the one of the preferred embodiment.

The second variant of the device, shown in figures from 7 to 10, is without windows 30 for housing the wheels 11, which in assembled condition A sideways protrude with respect to the device 1.

The carton blank 2 further has in correspondence of third walls 5, adjacent to the first 3 and second 4 walls, openings 8 for passage of the rotation shaft 12.

There are provided bushes 13, each one fixed to the respective opening 8, for supporting shaft 12 and strengthening cardboard edges of said opening.

The operation of this device variant differs from that of the above variant in that the wheels 11, being external and lateral to the container, assures an excellent stability.

The third variant of the device, shown in figures from 11 to 13, provides that each folded portions 7 has a first refolded portion 17 having respective second borders 27. The folded 7 and refold 17 portions form respectively recesses and protrusions almost straight, in which it is housed a shaft 12 having a diameter smaller than the shaft diameter of the preferred embodiment of figure 1. In particular, the refolded portions 17 assure the correct position of shaft 12 in all the conditions.

The figures from 14 to 17 show a fourth variant of the device which has a folded portion 7 having a first refolded portion 17 which has a second refolded portion 37, with respective third borders 35. The second 27 and third 35 borders have respective folding means 32 and related cuts 6.

In this variant, the folded portion 7 form a recess having length equal to the length of the first 3 and second 4 walls, in which the wheels 11 are positioned, so being contained inside the profile defined by first 3 and second 4 walls of the carton blank 2. The refolded portions, first 17 and second 37, support and position the shaft 12.

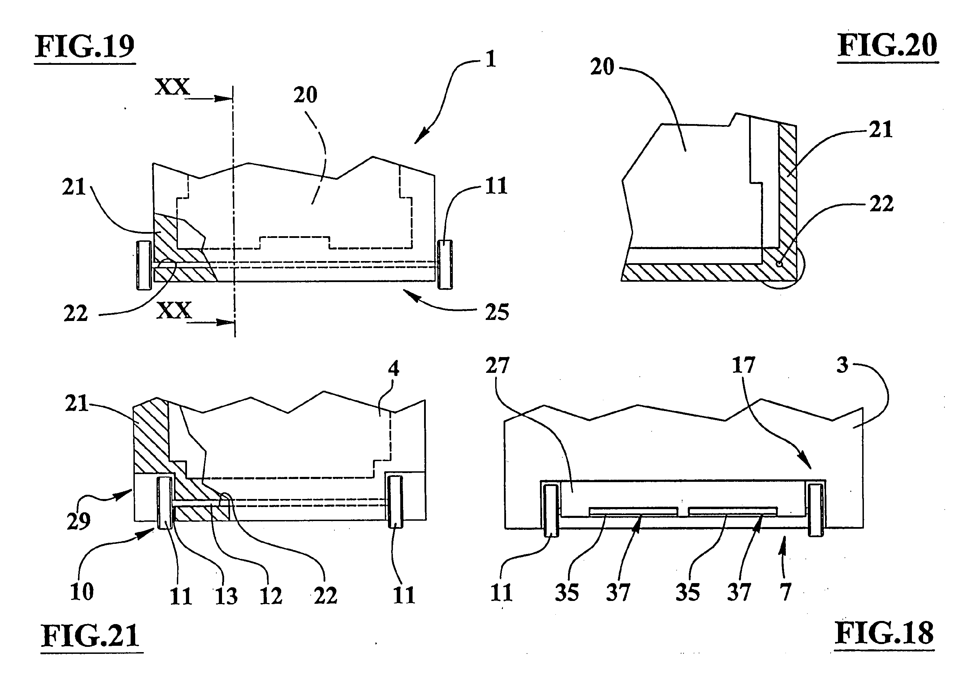

A fifth variant of device 1, shown in figure 18, provides a folded portion 7 carried out inside the edge portion 25, with length smaller than length of first 3 and second 4 walls, in order to embed completely the wheels 11.

The first refolded portion 17 includes two second refolded portions 37 for housing the shaft 12.

A sixth variant of the device 1, shown in figures 19 and 20, provides packing means 21 inserted inside the carton blank 2, folded and erected, fit for housing the product 20.

The packing means 21 are made of shock dampening material, for instance polyurethane or foam polystyrene, and they have, in correspondence of the edge portion 25 of device 1, a seat 22 for accommodating the moving means 10. Particularly, the seat 22 is a passing through or blind hole, which accommodate the rotation shaft 12. It is further provided that the seat 22 is a groove.

A seventh variant of device 1, shown in figure 21, differs from the sixth variant only in that the edge portion 25 of the carton blank 2 and the packing means 21 have cavities 29 fit to accommodate the wheels 11.

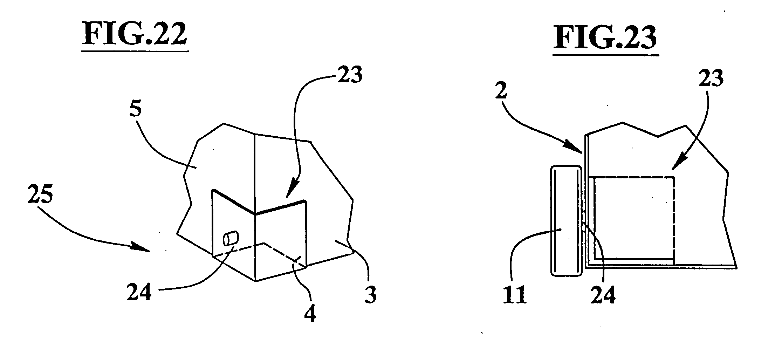

The figures 22 and 23 show an eighth variant of device 1 in which the moving means 10 include support means 23, fixed to the carton blank 2 in correspondence of the vertexes of the edge portion 25, and fit for supporting wheels 11.

Each support mean 23 includes at least two flat faces, preferably three, connected to form a right solid angle and a pivot 24, fixed to one of said flat faces for supporting the related wheel 11.

The support means 23 are made of high resistant metal or plastic material and they are fixed to the carton blank 2 by glueing or by metallic rivets or staples. It is provided that the support means 23 can be internally or externally fixed to the container.

The main advantage of the present invention is to provide a package device allowing to easily and comfortably move and handling packages also having huge dimensions and heavy weights, without requiring many people or dedicated, expensive and bulky handling means.

Other object of the present invention is to provides a package device, which is strong, reliable and very easy, and fast to be manufactured and assembled and, therefore, cheap.

## Claims

1. Package device for at least a product (20) and including a carton blank (2) with a plurality of transversal and longitudinal creasing lines, defining at least a first wall (3), connected to at least a second wall (4), the carton blank (2) being erected to form a container for the product (20), said device (1) being **characterized in that** includes moving means (10) having at least a revolving wheel (11) and supported by the carton blank (2), in proximity of an edge portion (25), defined by first (3) and second (4) walls, in an assembled condition (A) of the device (1).

2. Device according to claim 1 **characterized in that** the moving means (10) include at least a shaft (12) for at least the wheel (11).

3. Device according to claim 2 **characterized in that** the first (3) and second (4) walls of the carton blank (2) form at least a folded portion (7), each constituted by first borders (15) of the walls first (3) and second (4); said folded portion (7) being fit for housing at least the shaft (12).

4. Device according to claim 1 **characterized in that** includes at least a window (30) for housing a portion of the related wheel (11).

5. Device according to claim 3 **characterized in that** the diameter of shaft (12) is approximately equal to longitudinal dimension of the first borders (15).

6. Device according to claim 3 **characterized in that** each wall, first (3) and second (4), of carton blank (2) includes folding means (32) in correspondence of the end of each first border (15) connected to walls (3, 4).

7. Device according to claim 3 **characterized in that** walls, first (3) and second (4), of the carton blank (2) have cuts (6) defining side portions (33) of the first borders (15).

8. Device according to claim 3 **characterized in that** the overall transversal dimension of the at least folded portion (7) is at least equal to half of the transversal width of first wall (3).

9. Device according to claim 3 **characterized in that** includes a plurality of folded portions (7) each one having at least a first refolded portion (17), having respective second borders (27).

10. Device according to claim 9 **characterized in that** each first refolded portion (17) has at least a second refolded portion (37) provided with respective third borders (35).

11. Device according to claim 10 **characterized in that** each second (27) and third (35) border has respective folding means (32) and at least a related cut (6).

12. Device according to claim 7 **characterized in that** the cuts (6) are rectilinear and parallel.

13. Device according to claim 7 **characterized in that** each end of each cut (6) has a respective slot (9).

14. Device according to claim 2 **characterized in that** the carton blank (2) includes third walls (5), adjacent to first (3) and second (4) walls, each of them having at least an opening (8) for the passage of rotation shaft (12).

15. Device according to claim 14 **characterized in that** includes bushes (13), each one being fixed to the respective opening (8) for supporting shaft (12).

16. Device according to claim 1 **characterized in that** includes packing means (21) inserted inside the carton blank (2) fit for accommodating a product (20).

17. Device according to claim 16 **characterized in that** the packing means (21) include at least a seat (22) fit for housing at least partially the moving means (10).

18. Device according to claim 16 **characterized in that** the packing means (21) are made of polyurethane or foam polystyrene.

19. Device according to claim 1 **characterized in that** the moving means (10) includes support means (23) fixed to the carton blank (2) in correspondence of vertexes of the edge portion (25) and fit for supporting respective wheels (11).

20. Device according to claim 19 **characterized in that** each support mean (23) includes at least two flat faces, connected to form a straight angle and a fixing mean (24) for the related wheel (11).

21. Device according to claim 19 **characterized in that** the support means (23) are made of high resistant metal or plastic material.

22. Device according to claim 19 **characterized in that** the support means (23) are fixed to the carton blank (2) by glue or by metallic rivets or staples.

23. Device according to claim 1 **characterized in that** the carton blank (2) is made of corrugated fiberboard with two or more layers.

24. Device according to claim 1 **characterized in that** includes at least a handle, fixed or carried out in at least one wall of said device 1.

25. Device according to claim 1 **characterized in that** includes a set of recesses (38), each one fit for housing a protruding portion of a wheel (11) of an adjacent device (1), in correspondence of a piling condition (I), in which a plurality of devices (1) are superimposed and side by side positioned.
